# EUROPÄISCHE PATENTSCHRIFT

(11) **EP 2 059 866 B1**
(45) Veröffentlichungstag und Bekanntmachung des Hinweises auf die Patenterteilung: **03.08.2016**
(21) Anmeldenummer: 07801964.3
(22) Anmeldetag: 29.08.2007
(51) Int. Cl.: A47C 15/00, G06F 3/01, G06F 3/0338

(54) **STEUERUNGS- UND EINGABEVORRICHTUNG MIT EINEM SITZELEMENT**
CONTROL AND INPUT DEVICE WITH A SEAT ELEMENT
DISPOSITIF DE COMMANDE ET DE SAISIE COMPORTANT UN ÉLÉMENT DE SIÈGE

(30) Priorität: 30.08.2006 DE 102006040536
(43) Veröffentlichungstag der Anmeldung: 20.05.2009
(73) Patentinhaber: aeris GmbH, 85540 Haar (DE)
(72) Erfinder: GLÖCKL, Josef, 85551 Kirchheim (DE)
(74) Vertreter: Sperling, Rüdiger
(86) Internationale Anmeldenummer: PCT/EP2007/007543
(87) Internationale Veröffentlichungsnummer: WO 2008/025531

(56) Entgegenhaltungen:
- WO-A-92/17253
- WO-A-96/01448
- WO-A-03/098419
- DE-A1- 10 004 340
- DE-A1-102006 006 725
- DE-U1- 20 008 085
- DE-U1- 20 017 953
- DE-U1- 29 704 478
- US-A- 5 613 690
- S. BECKHAUS, K. J. BLOM, M. HARINGER: "A new gaming device and interaction method for a First-Person-Shooter" INTERNET ARTICLE, [Online] 19. Dezember 2005 (2005-12-19), XP002460986 Gefunden im Internet: URL:http://web.archive.org/web/20051219094 057/http://imve.informatik.uni-hamburg.de/ publications/ChairIO_FPS-CSam2005-Beckhaus BlomHaringer.pdf> [gefunden am 2007-12-03]

## Beschreibung

Die Erfindung betrifft eine Steuerungs- und Eingabevorrichtung gemäß dem Anspruch 1.

Bisherige Eingabevorrichtungen wie Keyboards, Joysticks, eine Computermaus oder sonstige manuell zu bedienende Steuermittel sind aus verschiedenen Gründen nachteilig. Zum einen werden die Tätigkeiten meist im Sitzen ausgeführt, wobei der Mensch im statischen Zustand verweilt und insbesondere der Rücken nachhaltig geschädigt werden kann. Dies führt bei vielen überwiegend im Sitzen arbeitenden Menschen zu chronischen Rückenschmerzen und für die Arbeitgeber kostenintensiven Ausfällen. Zum anderen werden in vielen Tätigkeitsbereichen die Hände für die eigentlich zu verrichtende Arbeit benötigt, beispielsweise bei der Bedienung von Maschinen oder bei gestalterischen Tätigkeiten, gleichzeitig müssen sie jedoch häufig eine vergleichsweise simple Eingabeaufforderung von Richtungsbewegungen erledigen. Folglich können die Richtungseingabe und die eigentliche Arbeit nur nacheinander ausgeführt werden. Weitere Beispiele sind aus Patentdokumenten DE 200080854 und DE 10004340 A bekannt.

Ausgehend von den beschriebenen Nachteilen ist es die Aufgabe der Erfindung, eine Steuerungs- und Eingabevorrichtung bereitzustellen, zu deren Bedienung keine Hände benötigt werden.

Nachfolgend werden vielseitige mögliche Variationen und vorteilhafte Ausgestaltungen der Erfindung erläutert, die untereinander kombinierbar sind, soweit dies technisch möglich ist und die Merkmale nicht im Widerspruch zueinander stehen.

Die Steuerungs- und Eingabevorrichtung definiert Erfindungsgemäß an dem Sitzelement ein Koordinatenkreuz und das Sitzelement ist um jede der Koordinatenachsen schwenkbar und/oder rotierbar gehalten.

Bei der Steuerungs- und Eingabevorrichtung ist Erfindungsgemäß jeweils mindestens eine Lichtquelle und mindestens eine Reflektorfläche an Teilen der Steuerungs- und Eingabevorrichtung angeordnet, die relativ zueinander bewegbar sind, wobei die Reflektorfläche im Strahl des Lichts angeordnet ist.

Die Steuerungs- und Eingabevorrichtung ist Erfindungsgemäß mindestens einen Sensor zur Erfassung des von der Lichtquelle ausgesendeten und der Reflektorfläche reflektierten Streulichts vorgesehen.

Vorteilhafterweise wandelt der Sensor der Steuerungs- und Eingabevorrichtung die Bewegungsänderungen in Signale um und leitet diese an den Rechner oder elektronische Schaltkreise weiter.

Die Lichtquelle der Steuerungs- und Eingabevorrichtung kann ein LED geeigneten Spektrums oder ein Laser sein.

Es ist auch von Vorteil, dass das Sitzelement eine Platte aufweisen kann, deren örtliche Verschiebung von einem örtlich festgelegten Detektor erfassbar ist und die Platte an einer das Sitzelement tragenden Pendelsäule angeordnet sein kann.

Erfindungsgemäß ist die Pendelsäule der Steuerungs- und Eingabevorrichtung in einem Pendelgelenk an einem Fuß gehalten.

Auch kann die Pendelsäule an einem Fuß gehalten sein und die Platte den Fuß bzw. einen Teil des Fußes zumindest teilweise überdecken.

Der Fuß der Steuerungs- und Eingabevorrichtung kann einen Kranz aufweisen und die Pendelsäule mittels mindestens eines Verbindungsstegs an dem Kranz halten, wobei der Detektor an dem Verbindungssteg angeordnet sein kann und die Platte den Verbindungssteg zumindest im Bereich des Detektors überdekken.

Das Sitzelement kann mittels einer Welle drehbar an der Pendelsäule gehalten sein und die Drehbewegung der Welle mittelbar oder unmittelbar durch mindestens einen an der drehfesten Säule angeordneten Detektor oder Sensors erfassbar sein.

Die Welle kann in der Pendelsäule federnd aufgenommen und der Federweg über einen Detektor mittelbar oder unmittelbar erfassbar sein.

Die Detektoren der Steuerungs- und Eingabevorrichtung können die Qualität der Bewegung (schnell, langsam, Beschleunigung) in entsprechende Signale umsetzen.

Auch können bei einer weiteren Ausführungsform die Steuerungs- und Eingabevorrichtung die Bewegungen bzw. Bewegungsänderungen mittels Beschleunigungssensoren, Neigungssensoren oder Dehnungsmessstreifen erfassbar sein.

In einer besonderen Ausführungsform kann das Pendelgelenk der Pendelsäule der Steuerungs- und Eingabevorrichtung als ein Gummigelenk ausgebildet sein, wobei die Dehnungsmessstreifen an oder innerhalb des Gummigelenks angeordnet sein können.

Bei einer Verwendung von Beschleunigungssensoren oder Neigungssensoren können diese im Bereich der Pendelsäule oder des Sitzelements angeordnet sein.

Die Bewegungen bzw. Bewegungsänderungen der Steuerungs- und Eingabevorrichtung können bei einer weiteren Ausführung über eine mechanische Bewegungserfassung mit Hilfe eines Track-Ball- oder Computermaus-Prinzips erfasst und einem Rechner oder an andere elektronische Schaltkreise weitergegeben werden.

Bei einer noch weiteren Ausführung kann das Sitzelement der Steuerungs- und Eingabevorrichtung nach Art einer Taumelscheibe gehalten und die Taumel- und Drehbewegung über einen an dem Sitzelement angeordneten Zapfen an einen Trackball übertragbar sein.

Weitere Vorteile der Erfindung werden nachstehend gemeinsam mit der Beschreibung eines bevorzugten Ausführungsbeispiels der Erfindung anhand der Figuren näher dargestellt. Die Darstellung in den beigefügten Figuren erfolgt beispielhaft und schematisch. In den Figuren sind jeweils gleiche Teile mit gleichen Bezugszeichen versehen. Ferner sind nur die für das Verständnis der Erfindung wesentlichen Elemente dargestellt.

Es zeigen:
Fig. 1 eine Steuerungs- und Eingabevorrichtung in der Seitenansicht;
Fig. 2a eine schematische Darstellung einer Steuerungs- und Eingabevorrichtung verbunden mit einem Rechner;
Fig. 2b eine schematische Darstellung einer Steuerungs- und Eingabevorrichtung verbunden mit einer Maschine;
Fig. 3 eine weitere Ausführung der Steuerungs- und Eingabevorrichtung in der Seitenansicht;
Fig. 4 eine Pendelsäule mit vertikal beweglicher Welle in einer Schnittansicht;
Fig. 5 einen oberen Teil einer Steuerungs- und Eingabevorrichtung in der Seitenansicht;
Fig. 6a eine Querschnittsansicht einer Ausführung des Pendelgelenks mit Pendelsäule;
Fig. 6b eine Querschnittsansicht einer alternativen Ausführung des Pendelgelenks mit Pendelsäule;
Fig. 7 eine Querschnittsansicht einer alternativen Ausführung der Pendelsäule mit Welle;
Fig. 8 eine Ansicht eines unteren Abschnitts der Pendelsäule in einer weiteren alternativen Ausführung;
Fig. 9a eine Draufsicht auf eine Pendelsäule mit daran angeschlossener Bewegungserfassungsmimik;

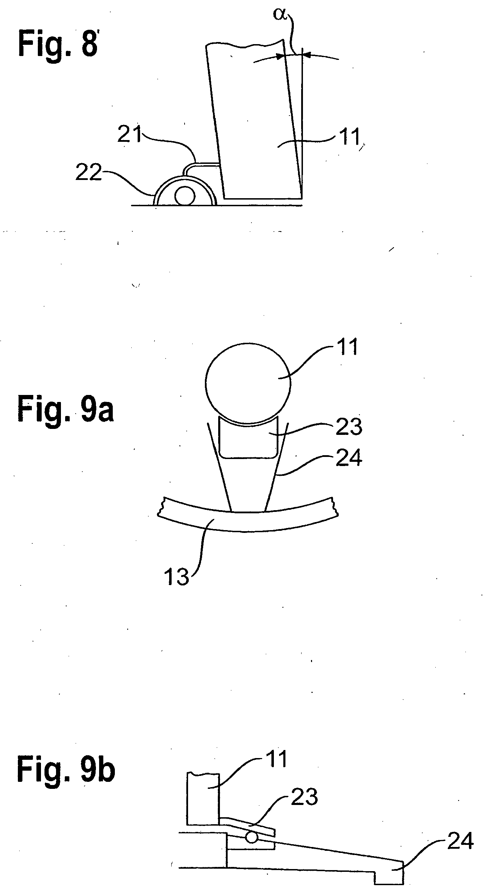

Fig. 9a eine Seitenansicht der Pendelsäule von Fig. 9a;

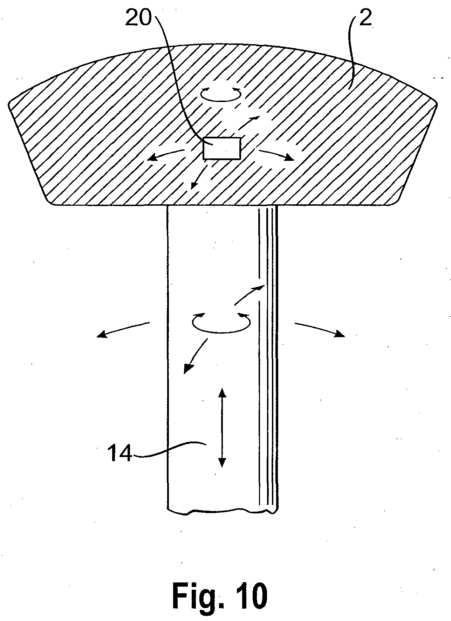

Fig. 10 eine Seitenansicht auf einen oberen Teil der Steuerungs- und Eingabevorrichtung in einer alternativen Ausführung;

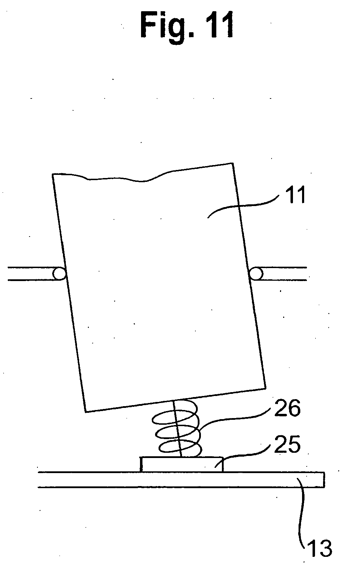

Fig. 11 eine weitere Ausführung der Bewegungserfassung der Pendelsäule in der Seitenansicht;

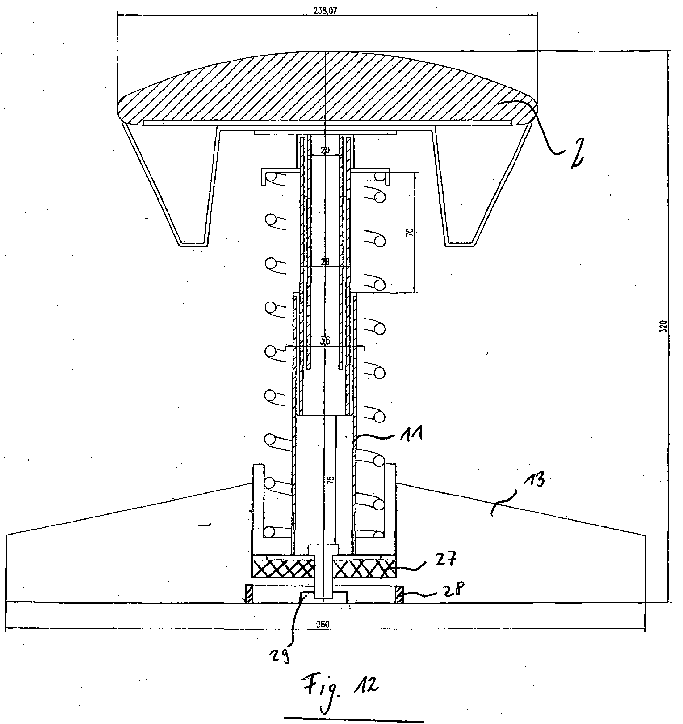

Fig. 12 eine Schnittansicht eines Hockers mit einer Bewegungserfassung im Fußteil; und

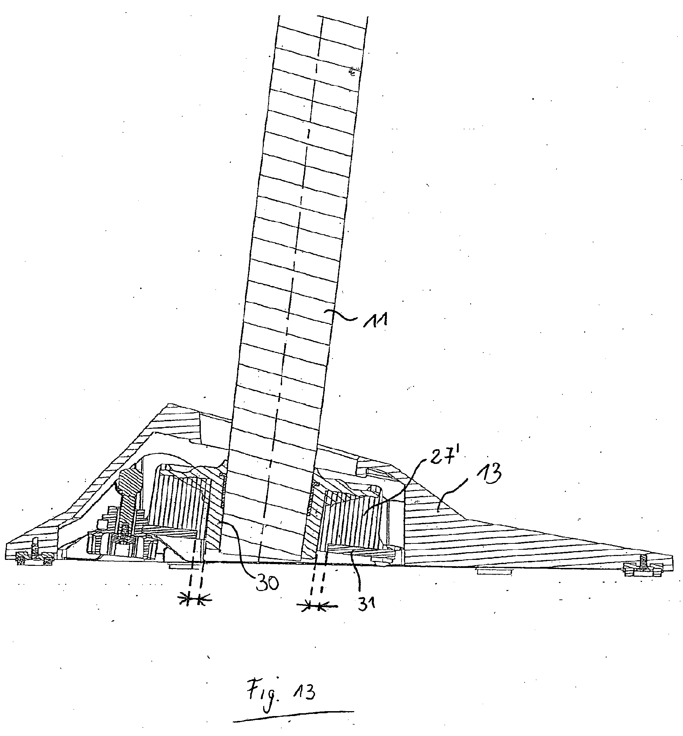

Fig. 13 eine Schnittansicht eines Steh-Sitzes mit einer weiteren alternativen Erfassung der Bewegung der Pendelsäule.

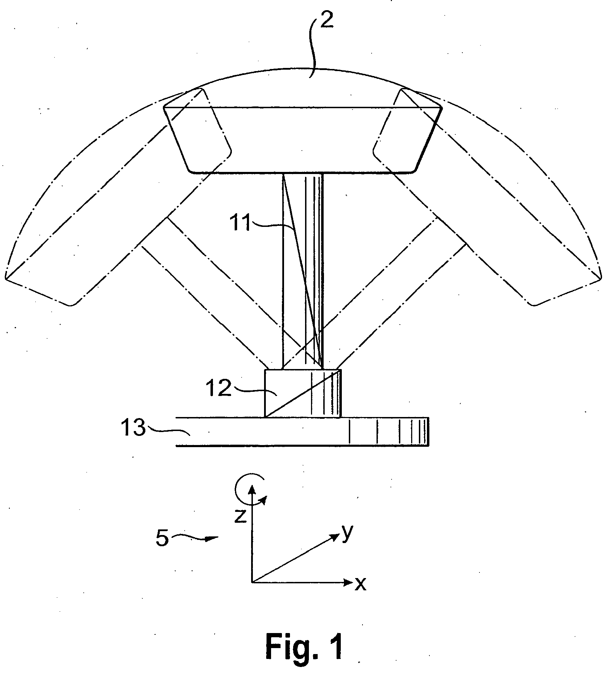

In Fig. 1 ist eine Steuerungs- und Eingabevorrichtung 1 in der Seitenansicht dargestellt. Die Steuerungs- und Eingabevorrichtung 1 ist bei der gezeigten Ausführung wie eine Art Hocker ausgebildet und umfasst ein Sitzelement 2, das von einer unterseitig angeordneten Pendelsäule 11, die vorzugsweise mittig befestigt ist, getragen wird. Die Pendelsäule 11 erstreckt sich in vertikaler Richtung senkrecht in ein am Fuß 13 angeordnetes Pendelgelenk 12. Mittels dem Pendelgelenk 12 ist es der Steuerungs- und Eingabevorrichtung 1 ermöglicht, das Sitzelement 2 mit der Pendelsäule 11 in allen Dimensionen des Koordinatenkreuzes 5 zu bewegen. Somit kann das Sitzelement 2 mit der Pendelsäule 11 zum Beispiel in seitliche Richtung ausgelenkt werden, wie es durch die strichpunktierten Linien dargestellt ist. Neben der ermöglichten Pendelbewegung in der aufgespannten X,Y-Ebene kann das Sitzelement 2 mit der Pendelsäule 11 ferner um eine Vertikalachse Z rotieren und auch beispielsweise durch Verwendung einer Gasdruckfeder die Position der eingestellten Höhe in Z-Richtung variieren. Das Fußteil 13 ist bei dieser Ausführung als eine Art Platte ausgebildet, es können jedoch auch Streben mit Rollen vorgesehen sein, so dass die gesamte Eingabevorrichtung 1 in X- und Y-Richtung beweglich ist.

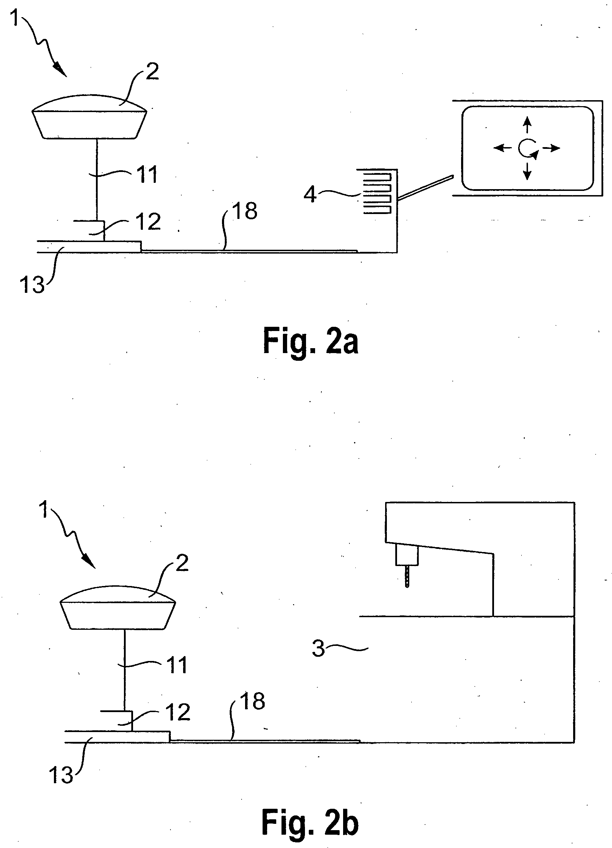

In den Fig. 2a und 2b ist die Steuerungs- und Eingabevorrichtung 1 mittels einer Übertragung 18 an einen Computer 4 bzw. eine Maschine 3 angekoppelt, so dass die jeweiligen Bewegungen an dem Sitzelement 2 mittelbar an die Maschine 3 bzw. den Computer 4 übertragen werden können. Bei einer Übertragung der Bewegung auf einen Computer 4 können beispielsweise die Bewegungsrichtungen eines Cursors oder von Figuren in Computerspielen durch eine entsprechenden Bewegung des Sitzelements 2 erzielt werden, ohne dass eine entsprechende Verwendung von Joysticks, einer Computermaus oder des Keyboards vonnöten wäre. Bei einer Übertragung der Bewegung des Sitzelements 2 auf eine Maschine 3 gemäß Fig. 2b kann beispielsweise das Werkzeug gemäß der Bewegung des Sitzelements 2 in den verschiedenen Richtungen des Koordinatensystems bewegbar sein. Zur Erfassung der Bewegungen kann innerhalb des Pendelgelenks 12 eine Sensorik verbaut sein, die die jeweilige Bewegung der Pendelsäule in entsprechende Signale an den Computer 4 oder die Maschine 3 umwandelt.

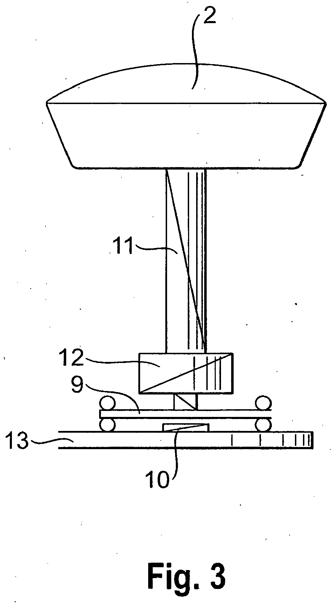

In Fig. 3 ist eine Ausführung der Steuerungs- und Eingabevorrichtung 1 dargestellt, bei der zwischen dem Pendelgelenk 12 und dem Fußteil 13 eine Platte 9 gelagert ist. Bei einer Auslenkung des Sitzelements 2 mit der Pendelsäule 11 verschiebt sich die Platte in die der Pendelbewegung gegenüberliegende Richtung, wobei diese Verschiebung von einem auf dem Fuß 13 angeordneten, örtlich festgelegtem Detektor 10 erfasst und als entsprechendes Signal zur Übertragung 18 bereitgestellt wird. Zur Gewährleistung der seitlichen Verschiebung der Platte 9 können beispielsweise Rollen vorgesehen sein. Der Übersichtlichkeit wegen ist auf zusätzliche, die Bewegung der Platte 9 begrenzende Einrichtungen in Fig. 3 verzichtet. Der Detektor 10 weist vorzugsweise eine Lichtquelle auf, die ein auf der Unterseite der Platte 9 aufgebrachtes Erkennungsmuster scannt und so die entsprechende Bewegung erfasst. Zusätzlich weist die den Fuß 13 teilweise überdeckende Platte 9 einen Drucksensor (nicht gezeigt) auf mittels dem Druckbewegungen durch das Sitzelement 2 und die Pendelsäule 11 auf die Platte 9 erfassbar sind. Somit kann beispielsweise eine Aktivität im Sinne einer Maustaste bei der Computermaus, des "Feuerknopfes" bei einem Joystick oder der "Enter"-Taste auf dem Keyboard bestätigt werden. Alternativ kann der Drucksensor auch im Bereich der Rollen am Fuß 13 vorgesehen sein.

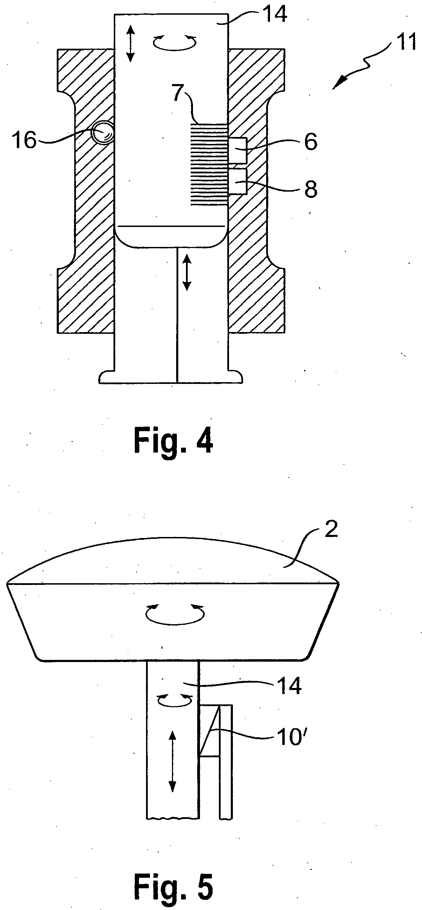

Fig. 4 zeigt eine Pendelsäule 11 mit vertikal beweglicher Welle 14 in einer Schnittansicht. Die Welle 14 ist vorgesehen, um die Vertikalbewegung (Z-Richtung) und die rotierende Bewegung des Sitzelements 2 zu ermöglichen, wobei zur Erfassung der jeweiligen Bewegung unterschiedliche Lösungen an der Pendelsäule 11 vorgesehen sein können. Beispielsweise kann die Pendelsäule 11 eine Kammer aufweisen, in der ein Ball gemäß des Computermausprinzips 16 rollbar gelagert ist, so dass eine Bewegung der Welle 14 in vertikaler oder rotierender Richtung eine entsprechende Gegenbewegung des Balles auslöst, die wiederum von einem Detektor erfasst wird und in ein entsprechendes Signal zur Übertragung umwandelbar ist. Alternativ kann an der Pendelsäule 11 eine Lichtquelle 6 angeordnet sein, die zur Lichtscannung auf eine auf der Welle 14 angeordnete Reflektorfläche 7 strahlt und über eine Musterung der Reflektorfläche 7 die jeweilige Bewegung der Welle 14 in entsprechende Signale zur Übertragung umwandelt. Alternativ kann an der Pendelsäule 11 ein Sensor 8 zur Erfassung des von der Lichtquelle 6 ausgesendeten und von der Reflektorfläche 7 reflektierenden Streulichts vorgesehen sein, wobei über den Sensor 8 die Bewegungsänderung der Welle 14 als Signal übertragbar ist. Die Reflektorfläche 7 ist auf der Welle 14 so dimensioniert, dass sie sich auch in den Extrempositionen der Welle 14 noch immer im Strahl der Lichtquelle 6 befindet. Als Lichtquelle 6 kann vorzugsweise ein LED geeigneten Spektrums oder ein Laser verwendet werden, so dass sowohl die Vertikal- als auch die Drehbewegung der Welle 14 mittelbar oder unmittelbar durch einen an der drehfesten Säule angeordneten Detektor oder Sensor erfassbar ist.

In Fig. 5 ist das Sitzelement 2 mit der darunter angeordneten Pendelsäule 11 dargestellt, wobei die Welle 14 der Pendelsäule 11 beispielsweise als eine Gasdruckfeder ausgebildet ist und federnd aufgenommen ist. Über einen außenseitig an der Welle 14 angeordneten Detektor 10' ist der Federweg der Welle 14 mittelbar oder unmittelbar erfassbar und in ein Signal für Rechner oder andere elektronische Schaltkreise umwandelbar.

Grundsätzlich sind als Sensoren oder Detektoren solche zu einzusetzen, die die Qualität der Bewegung in entsprechende Signale umsetzen können. Unter Qualität der Bewegung ist die Art der Bewegung, d.h. eine schnelle, langsame oder auch beschleunigte Bewegung zu verstehen. Als Sensoren oder Detektoren können folglich vorzugsweise Beschleunigungssensoren, Neigungssensoren oder Dehnungsmessstreifen 15 verwendet werden.

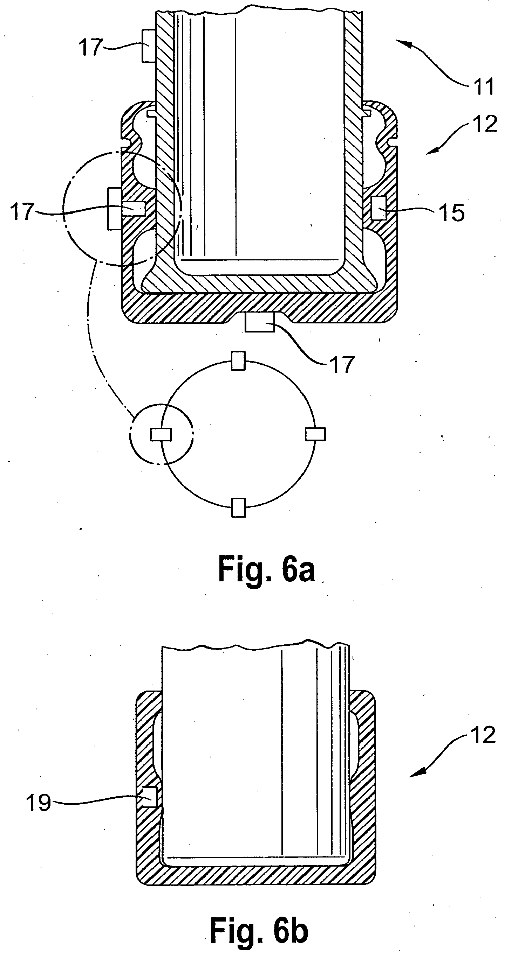

In Fig. 6a ist eine Querschnittsansicht einer Ausführung des Pendelgelenks mit darin aufgenommener Pendelsäule 11 dargestellt. Die Pendelsäule 11 weist außenseitig Sensoren 17 zur Erfassung der Bewegung in vertikaler und rotierender Richtung auf. In der gezeigten Ausführung ist das Pendelgelenk 12 als ein Gummigelenk ausgebildet, das gemäß der Pendel-, Dreh- und Vertikalbewegungen des Sitzelements 2 entsprechend zusammengedrückt wird. Diese Lageänderungen des Gummigelenks werden erfasst und in Signale zur Übertragung umgewandelt. Beispielsweise sind an dem Gummigelenk in Umfangsrichtung im Abstand von ca. 90° Sensoren 17 zur Erfassung der Neigung bzw. Pendelbewegung der Pendelsäule 11 angeordnet. Alternativ können an oder innerhalb des Gummigelenks Dehnungsmessstreifen 15 vorgesehen sein, die ebenfalls die Bewegung der Pendelsäule 11 erfassen.

Fig. 6b zeigt eine alternative Ausführungsform des Pendelgelenks 12, das in dieser Ausführung ebenfalls als ein Gummigelenk ausgebildet ist und Kammern 19 aufweist, in denen Sensoren zur Erfassung des Luftdrucks angeordnet sind. Bei einer Pendelbewegung der Pendelsäule 11 verändert sich der Luftdruck in den Luftkammern 19 je nach der Pendelrichtung. Die Luftdruckunterschiede werden in den über das Gummigelenk verteilten Luftkammern 19 erfasst und als Signale nach außen übertragen. In der gezeigten Ausführung ist lediglich eine Luftkammer 19 dargestellt, diese sind jedoch vorzugsweise an den Seitenrändern übereinander angeordnet, über den Umfang verteilt und auch im Bodenbereich des Gummigelenks zur Erfassung von vertikalen Druckbewegungen (Aktivtaste) vorgesehen.

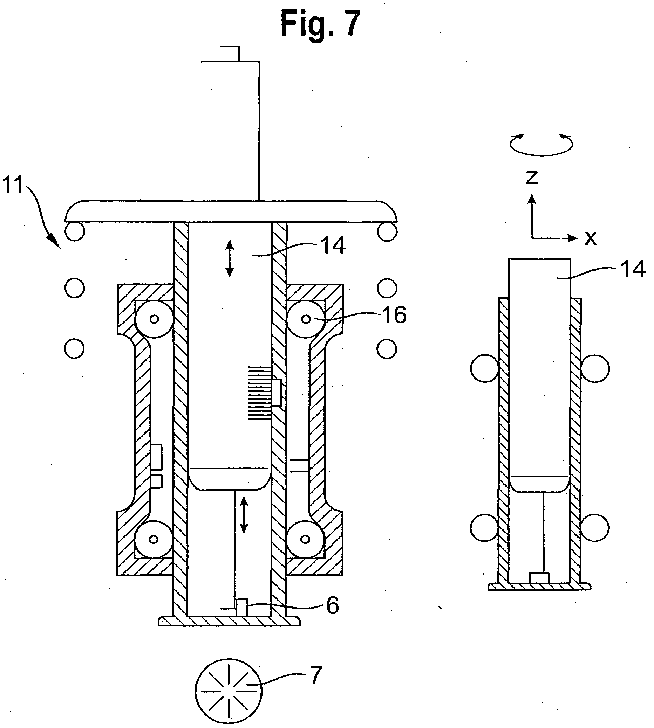

In Fig. 7 ist eine weitere Ausführung zur Erfassung der Bewegung der Welle 14 dargelegt, indem um die Welle 14 eine Bewegungserfassungsvorrichtung vorgesehen ist, die in der dargestellten Ausführung sowohl über Lichtscannung und Verwendung von Leucht- oder Laserdioden als auch über eine mechanische Erfassung mit Hilfe von Rollen gemäß des Computermausprinzips 16 verfügt. Zur Erfassung der Pendel- und Drehbewegung ist bodenseitig eine Lichtquelle 6 vorgesehen, die auf eine der Übersichtlichkeit wegen in Draufsicht dargestellte Reflektorfläche 7 strahlt und somit die Pendel- und Drehbewegungen der Pendelsäule 11 mit der Welle 14 erkennt. Durch die Aufnahme von Erfassungssystemen wie dem Computermausprinzip 16 oder der Sensorik in einer zusätzlichen Bewegungserfassungsvorrichtung ist gewährleistet, dass die Erfassung der Bewegung auch an bestehende Pendelhocker nachrüstbar ist.

In Fig. 8 ist eine alternative Ausführung zur Erfassung der räumlichen Lageänderung des Sitzelements 2 mit der Pendelsäule 11 dargestellt. Diese Lösung ist dadurch gekennzeichnet, dass die Mittel zur Feststellung der räumlichen Lageänderung extern an der Sitzvorrichtung angeordnet sind und der Bewegung der Sitzvorrichtung entsprechend mitbewegbar sind. Eine Auslenkung der Pendelsäule 11 um einen Winkel ◊ verursacht unmittelbar eine Lageänderung des extern angeordneten Mittels zur Feststellung dieser Lageänderung. Bei der gezeigten Vorrichtung ist dieses Mittel mit einem auf eine Track-Ball 21 einwirkenden elastischen Bügel 21 ausgeführt. Von der "Track-Ball"-Einrichtung 22 wird die Lageänderung der Pendelsäule 11 erfasst und als Signal übertragen. Diese mechanische Erfassung der Bewegung bzw. Bewegungsänderung ist besonders kostengünstig zu realisieren. Alternativ könnte anstatt des "Track-Ball"-Prinzips mittels des Bügels 21 auch eine Art Computermaus bewegt werden, die z.B. als Computerlasermaus ausgebildet ist und auf einer entsprechenden Erfassungsberfläche über den Untergrund mitbewegt wird. In einer alternativen nicht gezeigten Ausführung kann das Sitzelement 2 als eine Taumelscheibe ausgebildet sein und die Taumel- und Drehbewegungen mittels eines Zapfens auf den Track-Ball 22 übertragbar sein.

In Fig. 9 ist eine weitere Ausführung mit einer externen Vorrichtung zur Erfassung der Lageänderung des Sitzelements 2 und der Pendelsäule 11 dargestellt. Der Fußteil 13 ist mittels Streben 24 als Kranz ausgebildet, wobei die Pendelsäule 11 im Zentralbereich im Fußteil 13 angeordnet ist. Von der Pendelsäule 11 erstreckt sich ein Arm 23 radial nach außen über zumindest einen Teil der Strebe 24 des Fußteils 13. Auf der Strebe 24 ist oberseitig eine Vorrichtung zur Erfassung der Lageänderung vorgesehen, die in der gezeigten Ausführung als Kugel gemäß des Computermausprinzips 16 ausgeführt ist. Es ist jedoch auch möglich, in dem oberseitigen Bereich der Streben 24 eine Lichtscannung mit einer Lichtquelle und gegenüberliegender Reflektorfläche vorzusehen, um die Lageänderung der Pendelsäule 11 festzustellen.

In Fig. 10 ist das Sitzelement 2 mit der in Z-Richtung einstellbaren Welle 14 in einer Seitenansicht dargestellt, wobei ein Sensor 20 zur Erfassung der Lageänderung direkt im Sitzteil 2 im Bereich der Befestigung zur Welle 14 vorgesehen ist. Der Sensor 20 kann im Inneren des Sitzelements 2 an beliebiger Stelle positioniert sein. Vorzugsweise werden als Sensor 20 Beschleunigungssensoren und/oder Neigungssensoren verwendet. An der Stelle der Sensoren 20 können alternativ Mittel vorgesehen sein, die ein um die Steuerungs- und Eingabevorrichtung 1 erzeugtes Magnetfeld so stören, dass die räumliche Lageänderung des Sitzteils und/oder des Zwischenteils erfassbar ist.

Das bei den verschiedenen Ausführungsformen durch die erfasste Lageänderung erzeugte Signal kann jeweils an einen Rechner, eine Steuerungsvorrichtung oder andere elektronische Schaltkreise übertragen und von diesen in entsprechende Bewegungen verwertet werden. Die Übertragung der Signale erfolgt entweder mittels einer Kabel-, Bluetooth-, Infrarot- oder Funkverbindung.

In Fig. 11 ist eine weitere Ausführung zur Erfassung der Pendel- und Drehbewegung der Pendelsäule 11 mit dem Sitzelement 2 dargestellt. Auf dem Fuß 13 ist eine Bewegungseinrichtung 25 positioniert, die mit der gelagerten Pendelsäule 11 verbunden und sich bezüglich ihrer Pendelbewegung in eine entsprechend Gegenrichtung bewegt. Drehbewegungen werden hingegen gleichfalls durch Drehbewegungen der Erfassungseinrichtung 25 umgesetzt. Den steten Kontakt zum Fuß 13 bei vertikalen Längenänderungen (beispielsweise beim Federn mit der Gasdruckfeder) ist durch eine Verbindungssicherung 26, beispielsweise eine Feder, gewährleistet. Über die Verbindungssicherung 26 ist es auch möglich, Druckbewegungen auf das Sitzelement 2 auf die Bewegungseinrichtung 25 zu übertragen und entsprechend umsetzen. Wie bereits oben dargelegt können somit auch Eingabefunktionen ,wie bei einer Aktivtaste (Enter, Maustaste, Feuerknopf) realisiert werden. Als Bewegungseinrichtung 25 ist in der einfachsten Ausführung eine Computermaus mit mechanischer oder Laserfunktion vorgesehen.

Grundsätzlich sind die aufgezeigten Lösungen nicht auf die Verwendung eines Hockers beschränkt, vielmehr können beispielsweise auch Steh-Sitze, Stehhilfen oder dergleichen verwendet werden.

Die Fig. 12 zeigt eine weitere alternative Ausführung. Dabei ist vorgesehen, dass bei einer Belastung des Sitzelements 2 die Gasdruckfeder der Pendelsäule 11 nach unten gedrückt wird und sich dabei ein diese vertikale Bewegung ermöglichendes elastisches Element 27 verformt. Die durch die Verformung entstehende Längenänderung des elastischen Elements 27 kann mittels Sensoren (nicht gezeigt) gemessen und als Signal an einen Rechner oder dergleichen weitergeleitet werden. Zur Messung der Längenänderung können eine Längenmessung mittels Laser-Entfernungsmessung oder eine elektronische Messung eingesetzt werden. Es versteht sich, dass auch bei dieser Ausführung sämtlichen vorstehend aufgezeigten Sensoren und Messeinrichtungen verwendet werden können. Ferner ist bei einer Ausführung gemäß Fig. 12 eine elektromagnetische Erfassung der Auslenkung bereitgestellt. An einer Verlängerung der Pendelsäule 11 ist ein Magnet 29 angeordnet, dessen Magnetfeld einen an einer runden Öffnung des Fußes 13 angebrachten Leiter 28 schneidet. Die durch eine Auslenkung bzw. Drehung der Pendelsäule 11 mit dem Sitzelement 2 erzeugten Störung werden erfasst und als Bewegungssignal weitergeleitet.

Fig. 13 zeigt den unteren Teil eines Stehsitzes, wobei die Pendelsäule 11 in dem Fußteil 13 aufgenommen ist. Die Pendelsäule 11 umfasst eine Gasdruckfeder mit der die Höhe des nicht gezeigten Sitzteils variiert werden kann. Die Pendelsäule 11 ist in einen Konus 30 eingesteckt, durch den die Auslenkungsbewegungen der Pendelsäule 11 auf das elastische Element 27' übertragen werden. Bei einer Auslenkung wird das elastische Element 27' gequetscht und weicht in die gegebenen Freiräume aus. Zur Erfassung sind Sensoren unterhalb des Fußes 13 vorgesehen (nicht gezeigt), die die Entfernung der Pendelsäule 11 im Konus 30 zum Rand der Platte 31 messen (durch Pfeile dargestellt). Als Sensorik kann beispielsweise eine Laserabstandsmessung, eine magnetische Messung (vgl. Fig. 12) oder eine Messung mittels Drucksensoren an dem elastischen Element 27' verwendet werden. Eine mögliche Ausführung des Konus 30 kann so ausgebildet sein, dass an seiner Unterkante über den gesamten Umfang Sensoren vorgesehen sind, die die seitliche Auslenkung der Pendelsäule 11 gegenüber beispielsweise einer Rasterung auf dem Boden oder einem an dem Fußteil 13 befestigten Bodenblech erfassen und als Bewegungssignal an einen Rechner oder dergleichen weiterleiten. Eine Eingabefunktionen wie bei einer Aktivtaste (Enter, Maustaste, Feuerknopf) kann mittels der Sensoren an dem elastischen Element 27' gewährleistet werden.

**Bezugszeichenliste**

| | | | |
|---|---|---|---|
| 1. | Steuerungs- und Eingabevorrichtung | | |
| 2. | Sitzelement | | |
| 3. | Maschine | | |
| 4. | Computer | | |
| 5. | Koordinatenkreuz | | |
| 6. | Lichtquelle | | |
| 7. | Reflektorfläche | | |
| 8. | Sensor | | |
| 9. | Platte | | |
| 10. | Detektor | 10' | Detektor |
| 11. | Pendelsäule | | |
| 12. | Pendelgelenk | | |
| 13. | Fuß | | |
| 14. | Welle | | |
| 15. | Dehnungsmessstreifen | | |
| 16. | Computermaus-Prinzip | | |
| 17. | Sensor | | |
| 18. | Übertragung | | |
| 19. | Luftkammer | | |
| 20. | Sensor | | |
| 21. | Bügel | | |
| 22. | Track-Ball | | |
| 23. | Arm | | |
| 24. | Strebe | | |
| 25. | Bewegungseinrichtung | | |
| 26. | Verbindungssicherung | | |
| 27. | elastisches Element | 27'. | elastisches Element |
| 28. | Leiter | | |
| 29. | Magnet | | |
| 30. | Konus | | |
| 31. | Platte | | |

## Patentansprüche

1. Steuerungs- und Eingabevorrichtung (1) mit einem Sitzelement (2), einer Pendelsäule (11), einem Pendelgelenk (12) und einem Fuß (13) für Maschlnen (3) und Computer (4), wobei die Steuerungs- und Eingabevorrichtung (1) in allen drei Dimensionen und entsprechenden Rotationsachsen bewegbar ist, und wobei das Sitzelement (2) von einer in einem Pandelgelenk (12) an einem Fuß (13) gehaltenen Pendelsäule (11) getragen ist,
• und wobei die entsprechenden Bewegungen bzw. Bewegungsänderungen mechanisch oder optisch über Lichtscannung unter Verwendung von Leucht- oder Laserdioden erfasst und einem Rechner oder an andere elektronische Schaltkreise weitergegeben werden, und
• an dem Sitzelement (2) ein Koordinatenkreuz (5) definiert und das Sitzelement (2) um jede der Koordinatenachsen schwenkbar und/oder rotierbar gehalten ist, **dadurch gekennzeichnet, dass**
• jeweils mindestens eine Lichtquelle (6) und mindestens eine Reflektorfläche (7) an Teilen der Steuerungs- und Eingabevorrichtung (1) angeordnet ist, die relativ zueinander bewegbar sind, wobei die Reflektorfläche (7) im Strahl des Lichts angeordnet ist, und
• mindestens ein Sensor (8) zur Erfassung des von der Lichtquelle (6) ausgesendeten und der Reflektorfläche (7) reflektierten Streulichts vorgesehen ist.

2. Steuerungs- und Eingabevorrichtung (1) nach Anspruch 1, **dadurch gekennzeichnet, dass** der Sensor (8) die Bewegungsänderungen in Signale umwandelt und an den Rechner oder elektronische Schaltkreise weiterleitet.

3. Steuerungs- und Eingabevorrichtung (1) nach Anspruch 1 oder 2, **dadurch gekennzeichnet, dass** die Lichtquelle (6) ein LED oder ein Laser jeweils geeigneten Spektrums ist.

4. Steuerungs- und Eingabevorrichtung (1) nach mindestens einem der Ansprüche 1 bis 3, **dadurch gekennzeichnet**, das Sitzelement (2) eine Platte (9) aufweist, deren Verschiebung von einem örtlich festgelegten Detektor (10) erfassbar ist.

5. Steuerungs- und Eingabevorrichtung (1) nach mindestens einem der Ansprüche 1 bis 4, **dadurch gekennzeichnet, dass** die Platte (9) an der das Sitzelement (2) tragenden Pendelsäule (11) angeordnet ist.

6. Steuerungs- und Eingabevorrichtung (1) nach mindestens einem der Ansprüche 1 bis 5, **dadurch gekennzeichnet, dass** die Platte (9) den Fuß (13) bzw. einen Teil des Fußes (13) zumindest teilweise überdeckt.

7. Steuerungs- und Eingabevorrichtung (1) nach mindestens einem der vorangegangenen Ansprüche, **dadurch gekennzeichnet, dass** der Fuß (13) einen Kranz aufweist und die Pendelsäule (11) mittels mindestens eines Verbindungsstegs an dem Kranz gehalten ist, wobei der Detektor (10) an dem Verbindungssteg angeordnet ist und die Platte (9) den Verbindungssteg zumindest im Bereich des Detektors (10) überdeckt.

8. Steuerungs- und Eingabevorrichtung (1) nach mindestens einem der Ansprüche 1 bis 7, **dadurch gekennzeichnet, dass** das Sitzelement (2) mittels einer Welle (14) drehbar an der Pendelsäule (11) gehalten ist und die Drehbewegung der Welle (14) mittelbar oder unmittelbar durch mindestens einen an der drehfesten Säule angeordneten Detektor (10) oder Sensors erfassbar ist.

9. Steuerungs- und Eingabevorrichtung (1) nach Anspruch 8, **dadurch gekennzeichnet, dass** die Welle (14) in der Pendelsäule (11) federnd aufgenommen ist und der Federweg über einen Detektor (10') mittelbar oder unmittelbar erfassbar ist.

10. Steuerungs- und Eingabevorrichtung (1) nach mindestens einem der Ansprüche 1 bis 9, **dadurch gekennzeichnet, dass** die Detektoren (10) die Qualität der Bewegung, schnell, langsam, Beschleunigung in entsprechende Signale umsetzen können und die Bewegungen bzw. Bewegungsänderungen mittels Beschleunigungssensoren, Neigungssensoren oder Dehnungsmessstreifen (15) erfassbar sind.

11. Steuerungs- und Eingabevorrichtung (1) nach mindestens einem der Ansprüche 1 bis 10, **dadurch gekennzeichnet, dass** das Pendelgelenk (12) der Pendelsäule (11) als ein Gummigelenk ausgebildet ist.

12. Steuerungs- und Eingabevorrichtung (1) nach mindestens einem der Ansprüche 1 bis 11, **dadurch gekennzeichnet, dass** die Dehnungsmessstreifen (15) an oder innerhalb des Gummigelenks angeordnet sind.

13. Steuerungs- und Eingabevorrichtung (1) nach mindestens einem der Ansprüche 1 bis 12, **dadurch gekennzeichnet, dass** Beschleunigungssensoren oder Neigungssensoren (20) im Bereich der Pendelsäule (11) oder des Sitzelement (2) angeordnet sind.

14. Steuerungs- und Eingabevorrichtung (1) nach mindestens einem der Ansprüche 1 bis 13, **dadurch gekennzeichnet, dass** die entsprechenden Bewegungen bzw. Bewegungsänderungen über eine mechanische Bewegungserfassung mit Hilfe eines Track-Ball- oder Computermaus-Prinzips (16), des Computerlasermausprinzips erfasst und einem Rechner oder an andere elektronische Schaltkreise weitergegeben werden.

15. Steuerungs- und Eingabevorrichtung (1) nach mindestens einem der Ansprüche 1 bis 14, **dadurch gekennzeichnet, dass** das Sitzelement (2) nach Art einer Taumelscheibe gehalten ist und die Taumel- und Drehbewegung über einen an dem Sitzelement (2) angeordneten Zapfen an einen Trackball übertragbar ist.

## Claims

1. A control and input device (1) having a seat element (2), a swinging column (11), a pivot joint (12), and a foot (13), for machines (3) and computers (4), wherein the control and input device (1) is movable in all three dimensions and around corresponding rotational axes, and wherein the seat element (2) is borne by a swinging column (11) held in a pivot joint (12) on a foot (13), and further wherein:
-- the corresponding movements and changes in movements are mechanically sensed or are optically sensed via light scanning with the use of light diodes or laser diodes, and are transmitted to a computer or to another electronic circuit; and
-- a coordinate system (5) is defined at the seat element (2), and the seat element (2) is swingable and/or rotatable around each of the coordinate axes;
**characterized in that**
• at least one light source (6) and at least one reflector surface (7) is (are) disposed at parts of the control and input device (1), which light source and reflector surface are movable with respect to each other, wherewith the reflector surface (7) is disposed in the beam of the light; and
• at least one sensor (8) is provided for registering the scattered light [sic] sent from the light source (6) and reflected from the reflector surface (7).

2. The control and input device (1) according to claim 1; **characterized in that** the sensor (8) converts the changes of movements into signals, and transmits [the signals] to the computer or electronic circuit.

3. The control and input device (1) according to claim 1 or 2; **characterized in that** the light source (6) is an LED or a laser, having a suitable spectrum.

4. The control and input device (1) according to at least one of claims 1-3; **characterized in that** the seat element (2) has a plate (9) the displacement of which can be registered by a detector (10) having a fixed location.

5. The control and input device (1) according to at least one of claims 1-4; **characterized in that** the plate (9) is disposed at the swinging column (11) which bears the seat element (2).

6. The control and input device (1) according to at least one of claims 1-5; **characterized in that** the plate (9) is at least partially superposed over the foot (13) or a part of the foot (13).

7. The control and input device (1) according to one of the preceding claims; **characterized in that** the foot (13) has a ring, and the swinging column (11) is held to the ring by at least one connecting member, wherewith the detector (10) is disposed on the connecting member, and the plate (9) is superposed over the connecting member at least in the region of the detector (10).

8. The control and input device (1) according to one of claims 1-7; **characterized in that** the seat element (2) is rotatably held on the swinging column (11), by means of a shaft (14), and the rotational movement of the shaft (14) can be registered directly or indirectly by means of at least one detector (10) or sensor which is disposed on the column, which column is irrotationally mounted.

9. The control and input device (1) according to claim 8; **characterized in that** the shaft (14) is spring-loadedly accommodated in the swinging column (11), and the spring excursion can be registered directly or indirectly by a detector (10').

10. The control and input device (1) according to at least one of claims 1-9; **characterized in that** the detectors (10) can convert the nature of the movement, [such as] fast, slow, or accelerating, into corresponding signals, and the movements (or changes in movements) can be registered by means of acceleration sensors, inclination sensors, or strain-measuring strips (15).

11. The control and input device (1) according to at least one of claims 1-10; **characterized in that** the pivot joint (12) of the swinging column (11) is in the form of a rubber joint.

12. The control and input device (1) according to at least one of claims 1-11; **characterized in that** the strain-measuring strips (15) are disposed on or in the rubber joint.

13. The control and input device (1) according to at least one of claims 1-12; **characterized in that** acceleration sensors or inclination sensors (20) are disposed in the region of the swinging column (11) or the seat element (2).

14. The control and input device (1) according to at least one of claims 1-13; **characterized in that** the corresponding movements or movement changes are registered by mechanical registration means with the aid of a trackball or computer mouse principle (16) in conjunction with a computer laser mouse principle, and [the signals] are transmitted to a computer or other electronic circuit.

15. The control and input device (1) according to at least one of claims 1-14; **characterized in that** the seat element (2) is held in the manner of a swash plate, and the wobbling movement and rotational movement can be transmitted to a trackball by means of a pin or the like disposed on the seat element (2).

## Revendications

1. Dispositif de commande et de saisie (1) avec un élément de siège (2), une colonne pendulaire (11), une articulation pendulaire (12) et un pied (13) pour des machines (3) et des ordinateurs (4), le dispositif de commande et de saisie (1) étant mobile dans l'ensemble des trois dimensions et axes de rotation correspondants, et l'élément de siège (2) étant porté par une colonne pendulaire (11) maintenue dans une articulation pendulaire (12) sur un pied (13),
- et les mouvements ou modifications de mouvement correspondantes étant détectées mécaniquement ou optiquement par cannage lumineux en utilisant des diodes de lumière ou laser et étant transmises à un ordinateur ou à d'autres circuits de commutation électroniques, et
- un système d'axes de coordonnées (5) étant défini sur l'élément de siège (2) et l'élément de siège (2) étant maintenu de manière pivotante et/ou rotative autour de chacun des axes de coordonnées, **caractérisé en ce que**
- respectivement au moins une source de lumière (6) et au moins une surface de réflexion (7) sont agencées sur des parties du dispositif de commande et de saisie (1) qui sont mobiles relativement l'une par rapport à l'autre, la surface de réflexion (7) étant agencée dans le faisceau de lumière, et
- au moins un capteur (8) est prévu pour la détection de la lumière diffusée réfléchie par la surface de réflexion (7) et émise par la source de lumière (6).

2. Dispositif de commande et de saisie (1) selon la revendication 1, **caractérisé en ce que** le capteur (8) convertit les modifications de mouvement en signaux et les transmet à l'ordinateur ou aux circuits de commutation électroniques.

3. Dispositif de commande et de saisie (1) selon la revendication 1 ou 2, **caractérisé en ce que** la source de lumière (6) est une DEL ou un laser respectivement à propre spectre.

4. Dispositif de commande et de saisie (1) selon au moins l'une quelconque des revendications 1 à 3, **caractérisé en ce que** l'élément de siège (2) présente une plaque (9), dont le déplacement peut être détecté par un détecteur (10) fixé localement.

5. Dispositif de commande et de saisie (1) selon au moins l'une quelconque des revendications 1 à 4, **caractérisé en ce que** la plaque (9) est agencée sur la colonne pendulaire (11) portant l'élément de siège (2).

6. Dispositif de commande et de saisie (1) selon au moins l'une quelconque des revendications 1 à 5, **caractérisé en ce que** la plaque (9) recouvre au moins en partie le pied (13) ou une partie du pied (13).

7. Dispositif de commande et de saisie (1) selon au moins l'une quelconque des revendications précédentes, **caractérisé en ce que** le pied (13) présente une couronne et la colonne pendulaire (11) est maintenue à l'aide d'au moins une nervure de liaison sur la couronne, le détecteur (10) étant agencé sur la nervure de liaison et la plaque (9) recouvrant la nervure de liaison au moins dans la zone du détecteur (10).

8. Dispositif de commande et de saisie (1) selon au moins l'une quelconque des revendications 1 à 7, **caractérisé en ce que** l'élément de siège (2) est maintenu de manière rotative à l'aide d'un arbre (14) sur la colonne pendulaire (11) et le mouvement de rotation de l'arbre (14) est détecté directement ou indirectement par au moins un détecteur (10) ou capteur agencé sur la colonne ne pouvant tourner.

9. Dispositif de commande et de saisie (1) selon la revendication 8, **caractérisé en ce que** l'arbre (14) est reçu élastiquement dans la colonne pendulaire (11) et la course de ressort peut être détectée directement ou indirectement par un détecteur (10').

10. Dispositif de commande et de saisie (1) selon au moins l'une quelconque des revendications 1 à 9, **caractérisé en ce que** les détecteurs (10) peuvent convertir la qualité du mouvement, rapide, lent, accélération, en signaux correspondants et les mouvements ou modifications de mouvement peuvent être détectées à l'aide de capteurs d'accélération, capteurs d'inclinaison ou jauges de contrainte (15).

11. Dispositif de commande et de saisie (1) selon au moins l'une quelconque des revendications 1 à 10, **caractérisé en ce que** l'articulation pendulaire (12) de la colonne pendulaire (11) est réalisée comme une articulation en caoutchouc.

12. Dispositif de commande et de saisie (1) selon au moins l'une quelconque des revendications 1 à 11, **caractérisé en ce que** les jauges de contrainte (15) sont agencées sur ou dans l'articulation en caoutchouc.

13. Dispositif de commande et de saisie (1) selon au moins l'une quelconque des revendications 1 à 12, **caractérisé en ce que** des capteurs d'accélération ou capteurs d'inclinaison (20) sont agencés dans la zone de la colonne pendulaire (11) ou de l'élément de siège (2).

14. Dispositif de commande et de saisie (1) selon au moins l'une quelconque des revendications 1 à 13, **caractérisé en ce que** les mouvements ou modifications de mouvement correspondantes sont détectées par une détection de mouvement mécanique à l'aide d'un principe de track-ball ou souris d'ordinateur (16), du principe de souris laser d'ordinateur et sont transmises à un ordinateur ou à d'autres circuits de commutation électroniques.

15. Dispositif de commande et de saisie (1) selon au moins l'une quelconque des revendications 1 à 14, **caractérisé en ce que** l'élément de siège (2) est maintenu comme un plateau oscillant et le mouvement d'oscillation et de rotation peut être transmis par un tenon agencé sur l'élément de siège (2) à un track-ball.
